# EUROPEAN PATENT APPLICATION

(11) **EP 4 716 030 A1**
(43) Date of publication of application: **25.03.2026**
(21) Application number: 24807369.4
(22) Date of filing: 12.04.2024
(51) Int. Cl.: H01R 39/00, B60L 50/64, H01M 50/502, H01H 1/58, H01H 39/00

(54) **BATTERY DISCONNECT APPARATUS**

(30) Priority: 16.05.2023 KR 20230063106; 04.08.2023 KR 20230102051
(71) Applicant: LS E-MOBILITY SOLUTIONS CO., LTD., Cheongju-si, Chungcheongbuk-do 28439 (KR)
(72) Inventor: KIM, Jaeseop, Cheongju-si, Chungcheongbuk-do 28439 (KR)
(74) Representative: K&L Gates LLP
(86) International application number: PCT/KR2024/004944
(87) International publication number: WO 2024/237489

(57) **Abstract**

A battery disconnect apparatus is disclosed. The battery disconnect apparatus according to an aspect of the present invention may include: a lower case, of which the top portion is open and which includes mounting spaces arranged along a first axial direction, which is a lengthwise direction; a plurality of relays, each mounted in one of the mounting spaces; an upper case, which is coupled to the lower case so as to cover the open top portions of the mounting spaces and includes a plurality of upper mounting spaces at positions corresponding to the plurality of relays on an one-to-one basis; and a permanent magnet disposed in each of the plurality of upper mounting spaces to control an arc generated from the relays.

## Description

### Technical Field

The disclosure relates to a battery disconnect apparatus.

### Background Art

A battery disconnect unit (BDU) is one of power control components of eco-friendly vehicles, and refers to a component configured to connect or disconnect power between a battery and a load.

The BDU usually plays an important role together with a DC/DC converter, a high voltage converter, an OBC, a BMS, and the like, which constitute an eco-friendly vehicle battery system. Therefore, the application of the BDU to eco-friendly vehicles using batteries is extended.

The BDU generally includes a plurality of relays such as a main relay, a precharge relay, a high-speed charging relay, and a low-speed charging relay so as to operate in various modes such as a discharging mode, a high-speed charging mode, and a low-speed charging mode.

However, when a conventional BDU includes a plurality of relays, the plurality of relays are mounted together with a circuit board in a separate case having one space in a state in which a main body including a fixed contact and a movable contact in each of the plurality of relays is individually accommodated in a frame including an upper frame, a lower frame, and a bottom plate.

Accordingly, the conventional BDU requires components for respectively fixing the plurality of relays to the case, and an operation for electrically connecting a coil terminal and a connector of each relay via a cable such as a wire harness is required so as to operate the relay.

Therefore, there is a problem that, since the assemblability of the conventional BDU is deteriorated due to an excessive number of components, the workability and price competitiveness of the conventional BDU is deteriorated.

### Disclosure of Invention

### Technical Problem

Therefore, to obviate those problems, an aspect of the detailed description is to provide a battery disconnect apparatus which can simplify an electrical connection operation even when including a plurality of relays.

Another aspect of the detailed description is to provide a battery disconnect apparatus which can easily form an electrical connection between a relay and a circuit board.

Objectives of the disclosure are not limited to the above-described objectives, and other objectives of the disclosure, which are not mentioned, will be apparently understood by those skilled in the art from the following description.

### Solution to Problem

To achieve these and other advantages and in accordance with the purpose of the disclosure, as embodied and broadly described herein, there is provided a battery disconnect apparatus including a lower case including a mounting space having an open upper portion and formed along a first axis direction which is a length direction of the lower case; a plurality of relays each individually mounted in the mounting space; an upper case coupled to the lower case to be able to cover the open upper portion of the mounting space and including a plurality of upper mounting spaces respectively formed at positions corresponding one-to-one to the plurality of relays; and a permanent magnet arranged in each of the plurality of upper mounting spaces to be able to control an arc generated from the relay.

The permanent magnet may be detachably coupled to the upper case through a permanent magnet holder detachably coupled to the upper case while being arranged along an internal circumferential surface of the upper mounting space.

The permanent magnet may include a first permanent magnet and a second permanent magnet, the permanent magnet holder may include a first holder to which the first permanent magnet is detachably coupled and a second holder to which the second permanent magnet is detachably coupled, and each of the first holder and the second holder may be coupled to the upper case such that the first permanent magnet and the second permanent magnet face each other in the upper mounting space.

The upper case may include a coupling groove formed to be located in the upper mounting space, and the permanent magnet holder may include a holder body to which the permanent magnet is detachably coupled, and a hook portion formed to protrude outward from an end of the holder body by a predetermined length and detachably fitted in the coupling groove.

The permanent magnet holder may include a plurality of support ribs formed to protrude from the holder body to be able to support an edge of the permanent magnet, and the permanent magnet may be detachably coupled to one surface of the holder body while the edge is supported by the plurality of support ribs.

The relay may include a fixed contactor arranged to be exposed to the outside while protruding upward from a body by a predetermined height, the upper mounting space may receive the fixed contactor of the relay in a state in which the relay is mounted in the mounting space, and the permanent magnet may be arranged in the upper mounting space to surround the body of the relay.

The permanent magnet may be arranged to surround an arc chamber portion of the body of the relay.

The permanent magnet may include a first permanent magnet and a second permanent magnet, which are arranged in the upper mounting space such that one surfaces thereof face each other, and each of the first permanent magnet and the second permanent magnet may be provided in plurality to form a Halbach array.

The lower case may include a plurality of mounting spaces formed to be partitioned from each other while being arranged along the first axis direction, the plurality of relays may be individually mounted in the plurality of mounting spaces, respectively, and the plurality of upper mounting spaces may be formed at positions corresponding one-to-one to the plurality of mounting spaces, respectively.

The battery disconnect apparatus may further include a circuit board including an external connection terminal for electrical connection to the outside, and the lower case may further include a receiving space having an open upper portion and formed to be adjacent to the mounting space along a second axis direction which is a width direction of the lower case while being partitioned from the mounting space by a partition wall.

Each of the plurality of relays may be electrically connected to the external connection terminal through direct coupling to the circuit board mounted in the receiving space in a state in which each of the plurality of relays is individually mounted in the mounting space.

Each of the plurality of relays may include a coil terminal protruding outward from a body by a predetermined length, the circuit board may include a terminal connection portion arranged such that one end portion of the coil terminal can be fitted therein, and the terminal connection portion may be electrically connected to the external connection terminal through a wiring pattern formed on the circuit board.

The relay the relay may be physically coupled to the circuit board while being electrically connected to the external connection terminal through physical coupling of the coil terminal and the terminal connection portion.

### Advantageous Effects of Invention

According to the above-described configuration, in the battery disconnect apparatus according to the present disclosure, an electrical connection operation can be simplified even when a plurality of relays are included, so that an assembly process can be simplified and work productivity can be improved.

That is, in the battery disconnect apparatus according to the present disclosure, electrical connection between the plurality of relays and other components can be easily made, and electrical conduction stability can be ensured, so that the reliability of products can be improved.

Furthermore, in the battery disconnect apparatus according to the present disclosure, since the circuit board is arranged perpendicular to the bottom surface of the receiving space while being located at a side surface of the relay, a worker can easily check an arrangement and fastening state of the relay.

In addition, in the battery disconnect apparatus according to the present disclosure, since the circuit board is arranged perpendicular to the bottom surface of the receiving space, obstruction of air flow inside the lower case can be reduced. That is, when the circuit board is arranged in a horizontal direction parallel to the bottom surface of the receiving space, flow of air inside the circuit board is obstructed, and therefore, the circuit board may be heated by a temperature increase of the air therein. However, in the present disclosure, the circuit board is arranged perpendicular to the bottom surface of the receiving space, so that such a problem can be fundamentally prevented or minimized.

The effects of the disclosure are not limited to the effects mentioned above. Rather, it is to be understood that the effects of the disclosure include all the effects deducible from the description below.

### Brief Description of Drawings

FIG. 1 is a view showing a battery disconnect apparatus according to an embodiment of the present disclosure.
FIG. 2 is an exploded view of main components in FIG. 1.
FIG. 3 is a view when FIG. 2 is viewed from another direction.
FIG. 4 is a plan view of FIG. 1.

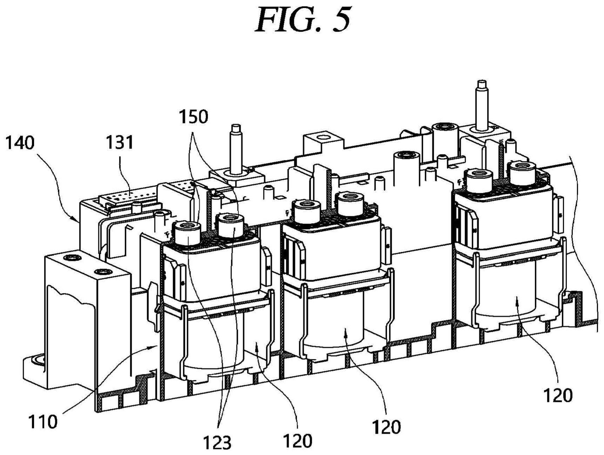

FIG. 5 is a view showing a state in which a portion of an upper case is taken along direction A-A in FIG. 1.
FIG. 6 is a view when a lower case is viewed from the top in the battery disconnect apparatus according to the embodiment of the present disclosure.
FIG. 7 is a view illustrating a coupling relationship of a relay, the lower case, and a circuit board in the battery disconnect apparatus according to the embodiment of the present disclosure, and is a view schematically showing a state in which the circuit board is separated from the lower case in a state in which the relay is mounted in the lower case.
FIG. 8 is a view schematically showing a state in which the circuit board is coupled to the lower case in FIG. 7.
FIG. 9 is a view showing a state in which the upper case and the lower case are taken along direction B-B in FIG. 4.
FIG. 10 is an enlarged view of portion "C" in FIG. 9.
FIG. 11 is a view showing a modification of a coil terminal support portion in FIG. 10.
FIG. 12 is a view showing the upper case in the battery disconnect apparatus according to the embodiment of the present disclosure.
FIG. 13 is a view when FIG. 12 is viewed from the bottom.
FIG. 14 is a view schematically showing an embedded busbar embedded in the upper case in the battery disconnect apparatus according to the embodiment of the present disclosure.
FIG. 15 is a view schematically showing an electrical relationship of the embedded busbar, the circuit board, and the relay in the battery disconnect apparatus according to the embodiment of the present disclosure.
FIG. 16 is a view showing a state in which some permanent magnet holders and some permanent magnets are separated from the upper case in the battery disconnect apparatus according to the embodiment of the present disclosure.
FIG. 17 is a view showing a state in which permanent magnet holders and permanent magnets, which are applicable to the battery disconnect apparatus are separated from each other according to the embodiment of the present disclosure.

### Mode for the Invention

Hereinafter, embodiments of the disclosure are described in detail with reference to the accompanying drawings so that those skilled in the art may easily practice the disclosure. The disclosure may be implemented in various different forms and is not limited to the embodiments described herein. A part irrelevant to the description will be omitted to clearly describe the disclosure, and the same or similar constituent elements will be designated by the same reference numerals throughout the specification.

The words and terms used in the specification and the claims are not limitedly construed as their ordinary or dictionary meanings, and should be construed as meaning and concept consistent with the technical spirit of the disclosure in accordance with the principle that the inventors can define terms and concepts in order to best describe their disclosure.

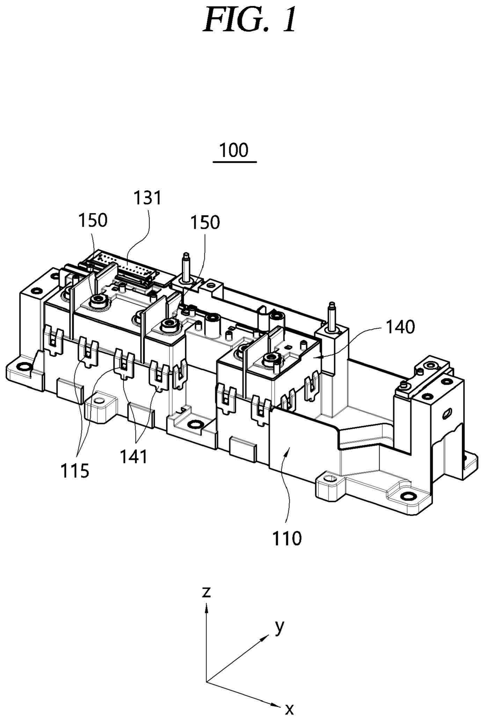

Moreover, as used in this specification and the appended claims, an upper surface may mean a surface viewed from the top with reference to FIG. 1, and a lower surface may mean a surface viewed from the bottom with respect to FIG. 1.

In addition, as used in this specification and the appended claims, a first axis direction may mean a direction parallel to an x axis shown in FIGS. 1 to 3, a second axis direction may mean a direction parallel to a y axis shown in FIGS. 1 to 3, and a third axis direction may mean a direction parallel to a z axis shown in FIGS. 1 to 3.

Additionally, as used in this specification and the appended claims, a length direction may mean a direction parallel to the x axis, a width direction may mean a direction parallel to the y axis, and a height direction may mean a direction parallel to the z axis.

A battery disconnect apparatus 100 according to an embodiment of the present disclosure may connect or disconnect power between a battery or a load. In an example, the battery disconnect apparatus 100 according to the embodiment of the present disclosure may be applied to an arbitrary vehicle provided with a battery (not shown), such as an EV, an HEV, a plug-in hybrid electric vehicle (PHEV), or an HV.

Also, the battery disconnect apparatus 100 according to the embodiment of the present disclosure may be applied to an arbitrary power system, e.g., an energy storage system (ESS), which is provided with a battery.

The battery disconnect apparatus 100 according to the embodiment of the present disclosure may include a lower case 110, a relay 120, a circuit board 130, and an upper case 140 as shown in FIGS. 1 to 3.

In the present disclosure, the relay 120 is a device which performs a mechanical driving and transmits a current signal, using the principle of an electromagnet, and may include a drive (not shown) including a coil (not shown) for applying a driving force therein, a movable contactor (not shown) moved by the drive, a fixed contactor 123 for allowing or interrupting conduction of electricity through contact with or separation from the movable contactor, and a coil terminal 122 for electrical connection to the circuit board 130. The drive, the movable contactor, and a portion of the fixed contactor 123 may be accommodated in a body 121.

In addition, the body 121 may include a portion having the coil terminal 122 electrically connected to the coil to protrude to the outside by a predetermined length while accommodating the driver and the coil therein and an arc chamber portion 121a accommodating the fixed contactor 123 and the movable contactor therein.

That is, the body 121 may include the portion forming a lower portion while accommodating the drive and the coil therein and the arc chamber portion 121a forming an upper portion while accommodating a portion of the fixed contactor 123 and the movable contactor therein, and the coil terminal 122 may be provided to protrude to the outside from the portion forming the lower portion of the body 121 by a predetermined length.

The relay 120 may perform any one function among various functions generally used in relays such as a main relay, a high-speed charging relay, and a low-speed charging relay.

The fixed contactor 123 may be provided to be exposed to the outside while protruding upward from the body 121 by a predetermined height and may be provided to protrude sideward from the body 121 while being connected to the coil.

In addition, the relay 120 may be mounted in a mounting space 111 of the lower case 110 which will be described later such that the fixed contactor 123 is located at an upper portion of the body 121.

Therefore, the fixed contactor 123 may be electrically connected to another electrical component or electrical device through a busbar or a cable such as harness in a state in which the relay 120 is mounted in the mounting space 111, and the coil terminal 122 may also be electrically connected to the electrical component or electrical device.

In addition, the relay 120 may be provided in plurality, and a plurality of relays 120a, 120b, and 120c may perform a same function or different functions.

The lower case 110 may provide spaces for individually accommodating the relay 120 and the circuit board 130, and each of the relay 120 and the circuit board 130 may be inserted into the lower case 110 along a third axis direction (z-axis direction) which is a height direction of the lower case 110.

Also, when the relay 120 is provided in plurality, the lower case 110 may individually accommodate the plurality of relays 120a, 120b, and 120c and the circuit board 130.

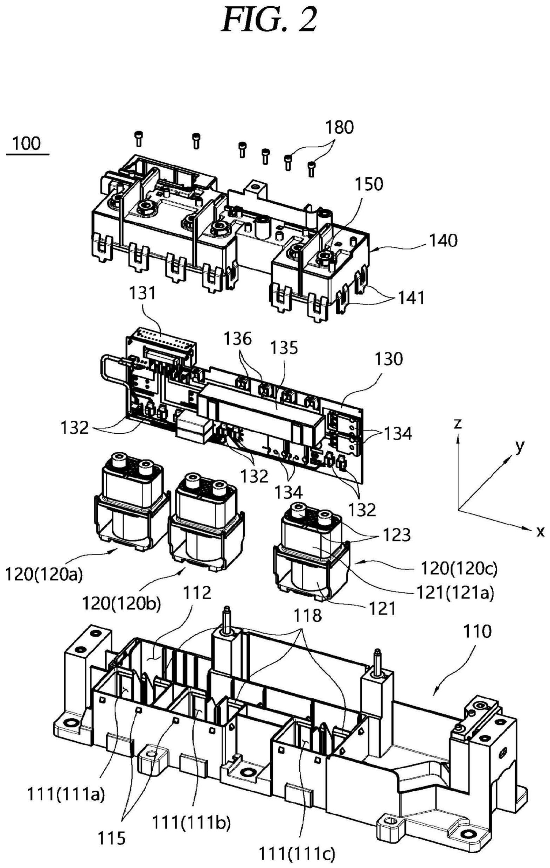

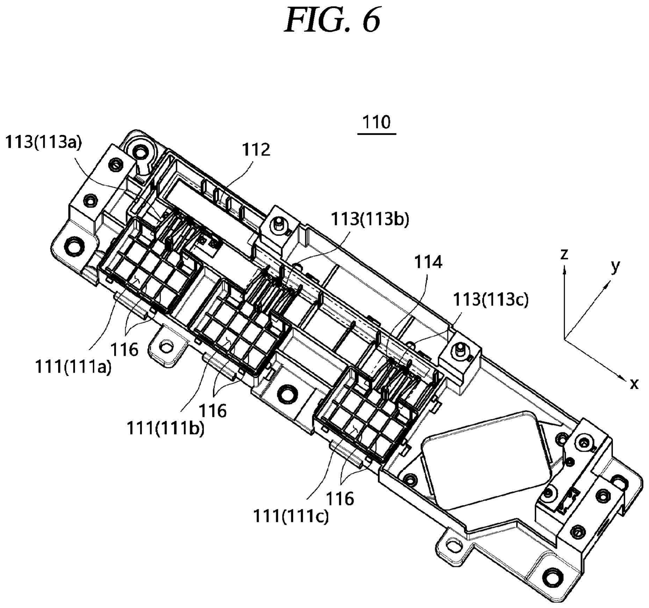

To this end, as shown in FIGS. 2 and 6, the lower case 110 may include the mounting space 111 which has an open upper portion and is formed along a first axis direction (x-axis direction) which is a length direction of the lower case 110, and a receiving space 112 which has an open upper portion and is formed adjacent to the mounting space 111 along a second axis direction (y-axis direction) which is a width direction of the lower case 110 while being partitioned from the mounting space 111 by a partition wall 118.

In this case, the mounting space 111 may be a space in which the relay 120 is mounted, and the receiving space 112 may be a space in which the circuit board 130 is mounted.

That is, in the battery disconnect apparatus 100 according to the embodiment of the present disclosure, the mounting space 111 in which the relay 120 is mounted and the receiving space 112 in which the circuit board 130 is mounted may be formed in the lower case 110 to be arranged along the width direction while being partitioned from each other.

The mounting space 111 may include a plurality of mounting spaces 111a, 111b, and 111cformed to be partitioned from each other.

Also, when the mounting space 111 includes the plurality of mounting spaces 111a, 111b, and 111c, the plurality of mounting spaces 111a, 111b, and 111c may be formed in the lower case 110 to be arranged along the length direction while being partitioned from each other.

Thus, although the battery disconnect apparatus 100 according to the embodiment of the present disclosure includes the plurality of relays 120a, 120b, and 120c, the plurality of relays 120a, 120b, and 120c can all be received in the lower case 110 provided as one member while being individually mounted in respective spaces partitioned from each other. Accordingly, in the battery disconnect apparatus 100 according to the embodiment of the present disclosure, the total number of components can be decreased, thereby improving work productivity.

Furthermore, in a case where the battery disconnect apparatus 100 according to the embodiment of the present disclosure includes the plurality of relays 120a, 120b, and 120c, when the plurality of relays 120a, 120b, and 120c are individually inserted into the respective mounting spaces 111 partitioned from each other, each relay 120 can be fixed to the lower case 110 without using separate fixing members. Accordingly, in the battery disconnect apparatus 100 according to the embodiment of the present disclosure, the number of components such as fixing members for respectively fixing the plurality of relays 120a, 120b, and 120c to the lower case 110 can be decreased, thereby improving assemblability.

In addition, in the battery disconnect apparatus 100 according to the embodiment of the present disclosure, since the relay 120 and the circuit board 130, which are mounted in the lower case 110, can be individually accommodated in the mounting space 111 and the receiving space 112, which are partitioned from each other along the width direction, respectively, the relay 120 and the circuit board 130 can be mounted in the lower case 110 to be respectively located different spaces partitioned from each other while not being stacked on each other.

Similarly, since when the battery disconnect apparatus 100 according to the embodiment of the present disclosure includes the plurality of relays 120a, 120b, and 120c, the plurality of relays 120a, 120b, and 120c mounted in the lower case 110 can be individually accommodated in the plurality of mounting spaces 111a, 111b, and 111c along the length direction, respectively, the plurality of relays 120a, 120b, and 120c can be individually mounted in the lower case or can be individually separated from the lower case 110.

Accordingly, in the battery disconnect apparatus 100 according to the embodiment of the present disclosure, the relay 120 and the circuit board 130 can be individually coupled to or separated from the lower case 110, thereby improving work convenience.

The mounting space 111 may include, as shown in FIG. 6, at least one protruding rib protruding upward from a bottom surface thereof by a predetermined height.

Thus, the relay 120 mounted in the mounting space 111 can be in line contact with the bottom surface of the mounting space 111 through the protruding rib 161.

That is, the protruding rib 116 can reduce a contact area between the relay 120 and the bottom surface of the mounting space 111. Accordingly, although an error occurs in the mounting space for mounting the relay 120 therein, the mounting space 111 can be easily corrected.

Meanwhile, the circuit board 130 may be mounted in the receiving space 112 to be arranged perpendicular to a bottom surface of the receiving space 112.

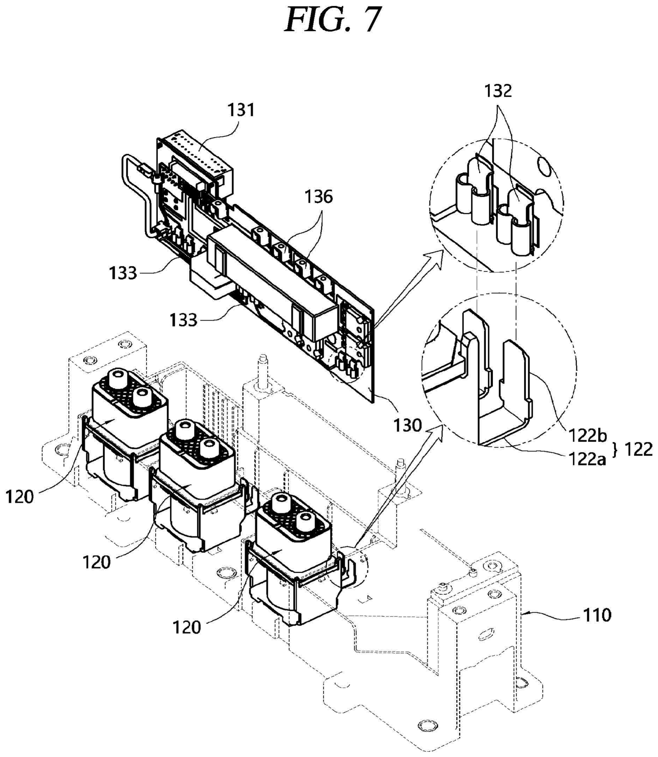

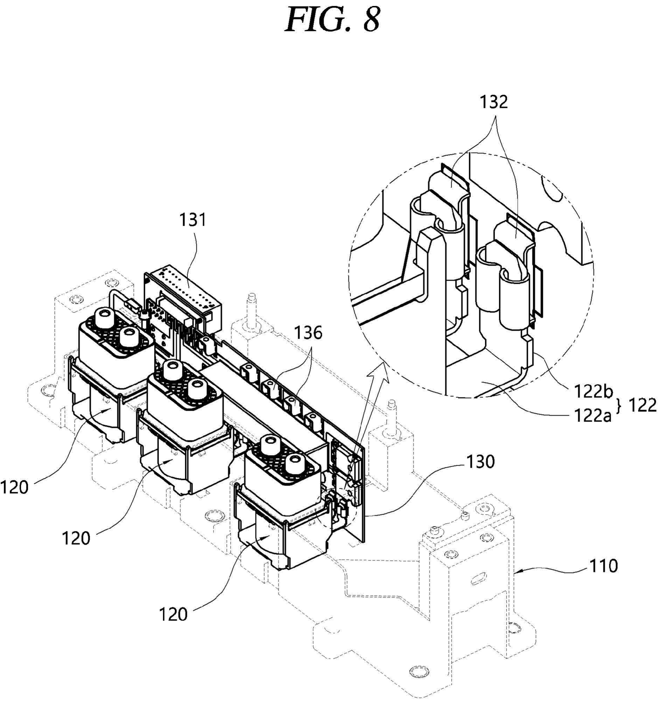

That is, the circuit board 130 may be mounted in a vertical direction in the receiving space 112 as shown in FIGS. 7 and 8.

Accordingly, in the battery disconnect apparatus 100 according to the embodiment of the present disclosure, since, as described above, the circuit board 130 is arranged in the vertical direction in the receiving space 112 while the relay 120 and the circuit board 130 are arranged adjacent to each other along the width direction of the lower case 110 without being stacked on each other, the total width of the lower case 110 can be minimized.

In the battery disconnect apparatus 100 according to the embodiment of the present disclosure, when the relay 120 is mounted in the mounting space 111 and the circuit board 130 is mounted in the receiving space 112, the relay 120 may be electrically connected to an external connection terminal 131.

That is, the relay 120 may be electrically connected to the external connection terminal 131 through direct coupling of the coil terminal 122 and the circuit board 130 mounted in the receiving space 112 in a state in which the relay 120 is mounted in the mounting space 111.

In addition, when the battery disconnect apparatus 100 according to the embodiment of the present disclosure includes the plurality of relays 120a, 120b, and 120c, each of the plurality of relays 120a, 120b, and 120c may be electrically connected to the external connection terminal 131 through direct coupling of the coil terminal 122 and the circuit board 130 mounted in the receiving space 112 in a state in which the plurality of relays 120a, 120b, and 120c are individually mounted in the plurality of mounting spaces 111a, 111b, and 111c, respectively.

To this end, the circuit board 130 may include the external connection terminal 131 for electrical connection to the outside and a first terminal connection portion 132 provided such that one end portion of the coil terminal 122 can be fitted therein.

In this case, the first terminal connection portion 132 may be electrically connected to the external connection terminal 131 through a wiring pattern 133 formed on the circuit board 130.

In addition, when the first terminal connection portion 132 is provided in plurality, each of the plurality of first terminal connection portions 132 may be electrically connected to the external connection terminal 131 through the wiring pattern 133.

Therefore, the relay 120 may be physically coupled to the circuit board 130 while being electrically connected to the external connection terminal 131 through physical coupling of the coil terminal 122 and the first terminal connection portion 132 in a state in which the relay 120 is mounted in the mounting space 111.

In addition, when the battery disconnect apparatus 100 according to the embodiment of the present disclosure includes the plurality of relays 120a, 120b, and 120c, each of the plurality of relays 120a, 120b, and 120c may be physically coupled to the circuit board 130 while being electrically connected to the external connection terminal 131 through physical coupling of the coil terminal 122 and the first terminal connection portion 132, which correspond to each other, in a state in which the plurality of relays 120a, 120b, and 120c are individually mounted in the plurality of mounting spaces 111a, 111b, and 111c, respectively.

The coil terminal 122 may include, as shown in FIGS. 7 and 8, a first portion 122a extending from the body 121 along the second axis direction which is the width direction of the lower case 110 in a state in which the relay 120 is mounted in the mounting space 111 and a second portion 122b extending upward along the third axis direction which is the height direction of the lower case 110 from an end of the first portion 122a, and the first terminal connection portion 132 may be coupled to the second portion 122b of the coil terminal 122.

Therefore, when the circuit board 130 is inserted into the receiving space 112 through the open upper portion of the receiving space 112 in a state in which the relay 120 is mounted in the mounting space 111, the coil terminal 122 and the first terminal connection portion 132 may be physically coupled to each other, and electricity may be conducted to the relay 120 and the external connection terminal 131 electrically connected to the first terminal connection portion 132 through the wiring pattern 133.

In an example, the external connection terminal 131 may be a connector for external connection, and the connector for external connection may be supplied with power for driving or receive a control signal for controlling the relay 120.

Therefore, the relay 120 mounted in the mounting space 111 may be supplied with the power for driving or receive the control signal for controlling the relay 120 through the external connection terminal 131.

Accordingly, although the battery disconnect apparatus according to the embodiment of the present disclosure includes the plurality of relays 120a, 120b, and 120c, each of the plurality of the relays 120a, 120b, and 120c can be electrically connected to the one external connection terminal through coupling of the coil terminal 122 and the first terminal connection portion 132, which are physically directly fastened to each other, and hence terminals for electrical connection to the outside can be integrated into one terminal.

Thus, although the battery disconnect apparatus according to the embodiment of the present disclosure includes the plurality of relays 120a, 120b, and 120c, the number of connection terminals used to electrically connect the respective relays 120a, 120b, and 120c to the outside can be minimized, and a cable connecting operation for electrical connection between connection terminals can be omitted.

Although it has been described that the external connection terminal 131 is a connector for external connection, the present disclosure is not limited thereto, and various electrical components known in the art may all be applied as long as the external connection terminal 131 can be electrically connected to the outside.

In addition, the circuit board 130 may be configured to include the external connection terminal 131, the first terminal connection portion 132, and the wiring pattern 133 connecting the external connection terminal 131 and the first terminal connection portion 132, but may be a precharge circuit-integrated PCB including a precharge circuit configured through a semiconductor switch 134 and a precharge resistance 135 in addition to the external connection terminal 131, the first terminal connection portion 132, and the wiring pattern 133, and a second terminal connection portion 136 arranged to be electrically connected to the precharge circuit.

Meanwhile, the battery disconnect apparatus 100 according to the embodiment of the present disclosure may be configured such that, although the relay 120 includes the coil terminal 122 protruding toward the receiving space 112 from the body 121 in a state in which the relay 120 is mounted in the mounting space 111, the relay 120 can smoothly move downward through the open upper portion of the mounting space 111.

That is, when the circuit board 130 is inserted into the receiving space 112 through the open upper portion of the receiving space 113 in a state in which the relay 120 is mounted in the mounting space 111 as described above, the second portion 122b of the coil terminal 122 protruding toward the receiving space 112 from the body 121 of the relay 120 can be smoothly coupled the first terminal connection portion 132 of the circuit board 130 inserted into the receiving space 112.

To this end, the lower case 110 may include, as shown in FIG. 6, a communication space 113 allowing the mounting space 111 and the receiving space 112, which are arranged adjacent to each other along the width direction, to communicate with each other, and the communication space 113 may be formed to have an open upper portion.

That is, the communication space 113 may be formed to be located in the partition wall 118 for partitioning the mounting space 111 and the receiving space 112 along the width direction of the lower case 110, and may be formed by cutting the partition wall 118 downward from the top of the partition wall 118 by a predetermined depth to have an open upper portion.

Therefore, when the relay 120 is inserted into the mounting space 111 through the open upper portion of the mounting space 111, the coil terminal 122 protruding from the body 121 by a predetermined length may be arranged to cross the communication space 113.

That is, when the relay 120 is inserted into the mounting space 111, the first portion 122a of the coil terminal 122 may be arranged to be located in the communication space 113, and the second portion 122b of the coil terminal 122 may be arranged to be located in the receiving space 112.

Accordingly, when the circuit board 130 is inserted into the receiving space 112 in a state in which the relay 120 is inserted in the mounting space 111, the second portion 122b arranged in the receiving space 112 can be smoothly fitted in the first terminal connection portion 132 arranged on the circuit board 130 in a state in which the second portion 122b protrudes upward from the bottom surface of the receiving space 112.

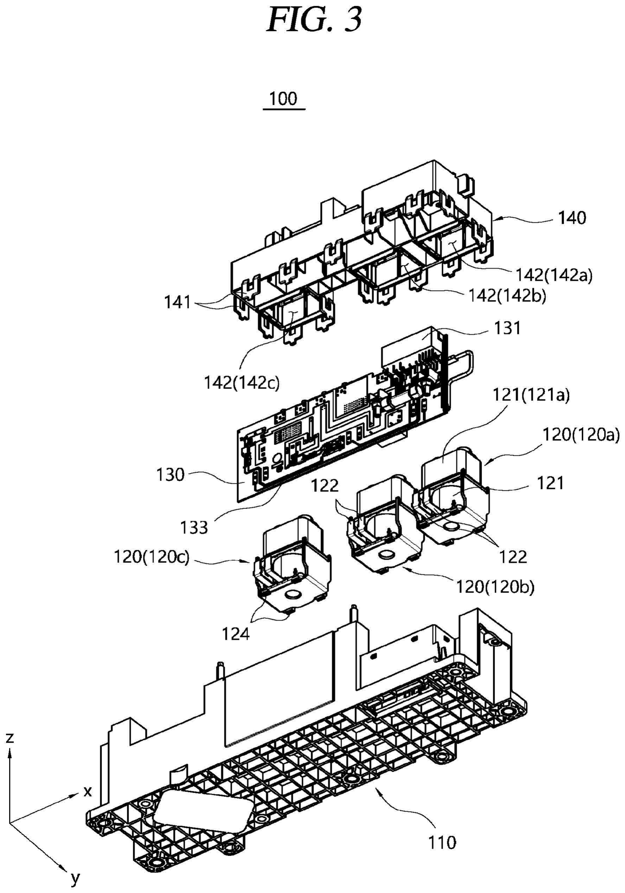

The relay 120 may include, as shown in FIG. 3, a plurality of edge protruding portions 124 protruding downward by a predetermined height at lower edges of the body 121.

The plurality of edge protruding portions 124 can prevent a bottom surface of the relay 120 from being in surface contact with the bottom surface of the mounting space 111 when the relay 120 is inserted into the mounting space 111.

That is, in the relay 120 mounted in the mounting space 111, a bottom surface of the body 121 can be spaced apart from the bottom surface of the mounting space 111 through the edge protruding portions 124.

Accordingly, although the coil terminal 122 is provided to protrude outward at a lower side of the body 121, the coil terminal 122 blocks a probability that the coil terminal 122 will be in contact with the bottom surface of the mounting space 111, so that deformation of the coil terminal 122 by an external force can be prevented.

In the present disclosure, when the lower case 110 includes the plurality of mounting spaces 111a, 111b, and 111c, the communication space 113 may be provided in a number of communication spaces corresponding one-to-one to the plurality of mounting spaces 111a, 111b, and 111c such that the plurality of mounting spaces 111a, 111b, and 111c can communicate with the receiving space 112 through the respective communication spaces.

That is, as shown in FIG. 6, the plurality of mounting spaces 111a, 111b, and 111c may communicate with the receiving space 112 through a plurality of communication spaces 113a, 113b, and 113c corresponding one-to-one thereto.

Meanwhile, the battery disconnect apparatus 100 according to the embodiment of the present disclosure may include a reinforcing rib 114 for preventing the strength of the lower case 110 from being reduced by the communication space 113 even when the lower case 110 includes the communication space 113.

That is, the lower case 110 may include, as shown in FIG. 6, at least one reinforcing rib 114 formed to protrude upward from a bottom surface of the communication space 113 by a predetermined height.

In addition, the reinforcing rib 114 may be formed to be located at a position where the reinforcing rib 114 does not interrupt entrance of the coil terminal 122 when the coil terminal 122 is arranged in the communication space 112.

Accordingly, in the battery disconnect apparatus 100 according to the embodiment of the present disclosure, although the lower case 110 includes the communication space 113, the strength of the lower case 110 can be reinforced through the reinforcing rib 114, thereby enhancing durability against an external force.

Meanwhile, in the battery disconnect apparatus 100 according to the embodiment of the present disclosure, when the relay 120 is mounted in the mounting space 111 and the circuit board 130 is mounted in the receiving space 112, the relay 120 may be electrically connected to the external connection terminal 131 arranged on the circuit board 130 through physical contact between the coil terminal 122 and the circuit board 130.

The battery disconnect apparatus 100 according to the embodiment of the present disclosure may further include coil terminal support portions 117 and 127 arranged in the lower case 110 such that electricity can be stably conducted to the relay 120 and the external connection terminal 131 through physical contact between the coil terminal 122 and the circuit board 130

That is, the coil terminal support portions 117 and 217 may be arranged in the lower case 110 to press upward the coil terminal 122 or a contact portion 137 of the circuit board 130, which is in contact with the coil terminal 122, when the relay 120 and the circuit board 130 are mounted in the mounting space 111 and the receiving space 112, respectively.

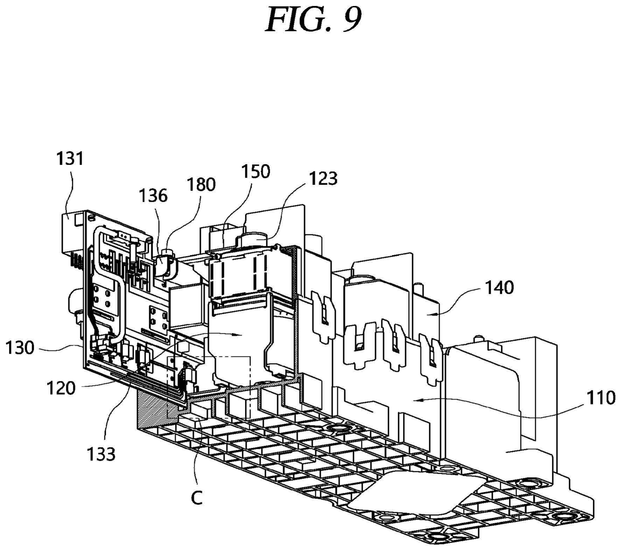

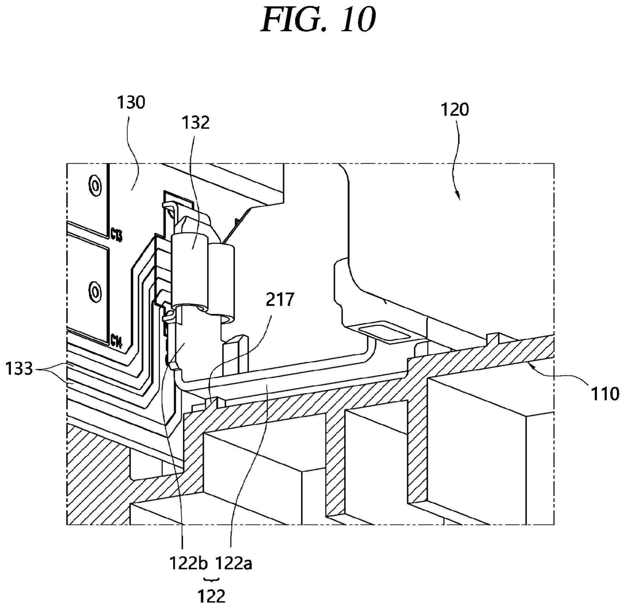

In an example, as shown in FIGS. 9 and 10, the coil terminal support portion 117 may be a protruding portion protruding upward from the bottom surface of the receiving space 112 by a predetermined height to be able to support a lower surface of the coil terminal 122 while being in contact with the lower surface of the coil terminal 122 when the relay 120 is mounted in the mounting space 111.

In this case, as described above the coil terminal 122 may include the first portion 122a extending from the body 121 along the second axis direction which is the width direction of the lower case 110 in a state in which the relay 120 is mounted in the mounting space 111 and the second portion 122b extending upward along the third axis direction which is the height direction of the lower case 110 from the end of the first portion 122a, and the second portion 122b may be arranged to be located in the receiving space 112.

In addition, the circuit board 130 may include the external connection terminal 131 for electrical connection to the outside and the first terminal connection portion 132 provided such that the one end portion of the coil terminal 122 can be fitted therein, and the first terminal connection portion 132 may be electrically connected to the external connection terminal 131 through the wiring pattern 133 formed on the circuit board 130.

Therefore, when the circuit board 130 is inserted into the receiving space 112 through the open upper portion of the receiving space 112 in a state in which the relay 120 is mounted in the mounting space 111, as shown in FIG. 10, the second portion 122b of the coil terminal 122 may be physically coupled to the first terminal connection portion 132, and the coil terminal support portion 117 protruding upward from the bottom surface of the receiving space 112 by a predetermined height may support a lower surface of the first portion 122a arranged in the receiving space 112.

That is, when the circuit board 130 is inserted into the receiving space 112, a fastening frictional force may occur in physical coupling of the second portion 122b of the coil terminal 122 and the first terminal connection portion 132, and the coil terminal 122 may be pressed downward by the fastening frictional force.

In this case, since the coil terminal support portion 117 formed on the bottom surface of the receiving space 112 supports a lower portion of the coil terminal 122 through contact with the coil terminal 122 fitted to the first terminal connection portion 132, so that the coil terminal 122 can be prevented from moving downward, the second portion 122b can be smoothly fastened to the first terminal connection portion 132.

Accordingly, when the circuit board 130 is inserted into the receiving space 112 through the open upper portion of the receiving space 112 in a state in which the relay 120 is mounted in the mounting space 111, the coil terminal 122 can be smoothly coupled to the first terminal connection portion, and electricity can be conducted to the relay 120 and the external connection terminal 131 electrically connected the first termina connection portion 132 through the wiring pattern 133.

In addition, since the coil terminal support portion 117 support the lower portion of the coil terminal 122 in a process of inserting the circuit board 130 into the receiving space 112, the coil terminal 122 can be prevented from being damaged even when an excessive load is applied to the coil terminal 122 in a process of coupling the coil terminal 122 to the first terminal connection portion 132.

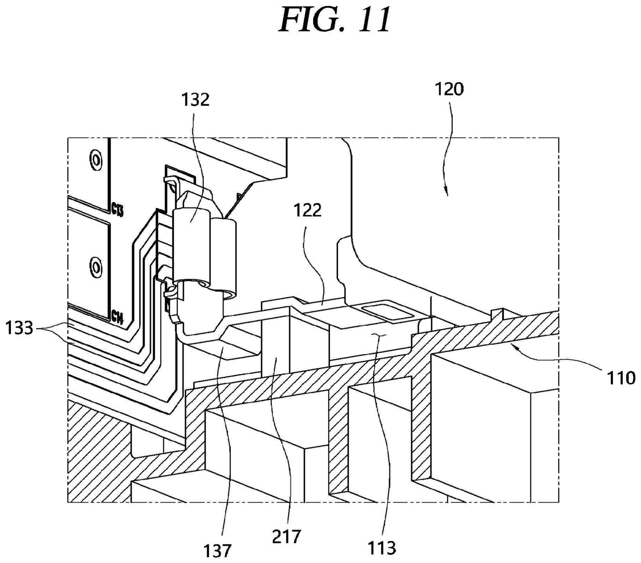

In another example, as shown in FIG. 11, the coil terminal support portion 217 may be a protruding portion formed to protrude from the bottom surface of the communication space 113 by a predetermined height.

In this case, the coil terminal 122 may be formed to extend from the body 121 along the second axis direction which is the width direction of the lower case 110 in a state in which the relay 120 is mounted in the mounting space 111. The coil terminal 122 may be arranged to be located in the communication space 113.

In addition, the circuit board 130 may include the external connection terminal 131 for electrical connection to the outside and the contact portion 137 protruding by a predetermined length to be able to be in physical contact with the coil terminal 122 in a state in which the circuit board 130 is mounted in the receiving space 112.

In this case, the contact portion 137 may be connected to the first terminal connection portion 132, and the first terminal connection portion 132 may be in a state in which the first terminal connection portion 132 is electrically connected to the external connection terminal 131 through the wiring pattern 133 formed on the circuit board 130.

That is, the contact portion 137 may protrude by a predetermined length such that the other end portion thereof is located in the communication space 113 in a state in which one end portion thereof is coupled to the first terminal connection portion 132 of the circuit board 130.

The contact portion 137 may be detachably coupled to the first terminal connection portion 132, but may be integrally formed with the first terminal connection portion 132. The contact portion 137 may be electrically connected directly to the external connection terminal 132 through the wiring pattern 133.

In this case, when the circuit board 130 is mounted in the receiving space 112 while the relay 20 is mounted in the mounting space 111, the contact portion 137 and the coil terminal 122 may be arranged such that lengths of portions including one end portions thereof overlap each other in the communication space 113 as shown in FIG. 11. The coil terminal support portion 217 formed to protrude upward from the bottom surface of the communication space 113 by a predetermined height may support lower portions of the portions of the contact portion 137 and the coil terminal 122, which overlap each other in the communication space 113.

Therefore, when the relay 120 is inserted into the mounting space 111 such that the one end portion of the coil terminal 122 partially overlaps an end portion side of the contact portion 137 in a state in which the circuit board 130 is inserted into the receiving space 112 and the one end portion of the contact portion 137 is supported through the coil terminal support portion 217, both the portions of the contact portion 137 and the coil terminal 122, which overlap each other in the communication space 113, may be supported upward through the coil terminal support portion 217.

Similarly, when the circuit board 130 is inserted into the receiving space 112 such that the one end portion of the contact portion 137 partially overlaps an end portion side of the coil terminal 122 in a state in which the relay 120 is inserted into the mounting space 111 and the one end portion of the coil terminal 122 is supported through the coil terminal support portion 217, both the portions of the contact portion 137 and the coil terminal 122, which overlap each other in the communication space 113, may be supported upward through the coil terminal support portion 217.

Accordingly, since the portions of the contact portion 137 and the coil terminal 122, which overlap each other in the communication space 113, can maintain a state in which the contact portion 137 and the coil terminal 122 are in contact with each other through the coil terminal support portion 217, electricity can be stably conducted to the relay 120 and the external connection terminal 131 through the contact between the coil terminal 122 and the contact portion 137.

The upper case 140 may be coupled to the lower case 110 to be able to cover an open upper portion of the lower case 110.

In an example, the upper case 140 may be coupled to the lower case 110 to be able to cover both the open upper portion of the mounting space 111 and the open upper portion of the receiving space 112.

In addition, when the lower case 110 includes the plurality of mounting spaces 111a, 111b, and 111c, the upper case 140 may be coupled to the lower case 110 to be able to entirely cover open upper portions of the plurality of mounting spaces 111a, 111b, and 111c and the open upper portion of the receiving space 112.

In this case, as shown in FIG. 1, the upper case 140 may be coupled to the lower case 110 such that the external connection terminal 131 arranged on the circuit board 130 is exposed to the outside while covering the upper portion of the receiving space 112.

Accordingly, although the upper case 140 is fastened to the lower case 110 in a state in which the circuit board 130 is mounted in the receiving space 112, the external connection terminal 131 is exposed to the outside, to be smoothly connected to a battery or another load.

The upper case 140 may be detachably coupled to the lower case 110.

To this end, the lower case 110 may include a plurality of projections 115 formed to protrude outward along a circumferential direction thereof, and the upper case 140 may include fitting members 141 arranged at positions respectively corresponding to the plurality of projections 115 such that the projection 115 can be detachably fitted in the fitting member 141.

Therefore, the upper case 140 and the lower case 110 may be detachably coupled to each other through the projections 115 and the fitting members 141, which correspond to each other.

However, the coupling method of the upper case 140 and the lower case 110 is not limited thereto, and various methods known in the art may all be applied as long as the upper case 140 and the lower case 110 can be detachably coupled to each other.

In the battery disconnect apparatus 100 according to the embodiment of the present disclosure, the relay 120 may be mounted in the mounting space 111 of the lower case 110 such that the fixed contactor 123 is located at the upper portion of the body 121, and the fixed contactor 123 may be electrically connected to the circuit board 130 mounted in the receiving space 112 through the upper case 140.

That is, when the upper case 140 and the lower case 110 are coupled to each other in a state in which the relay 120 is mounted in the mounting space 111 and the circuit board 130 is mounted in the receiving space 112, the fixed contactor 123 of the relay 120 and the circuit board 130 may be electrically connected to each other through the upper case 140.

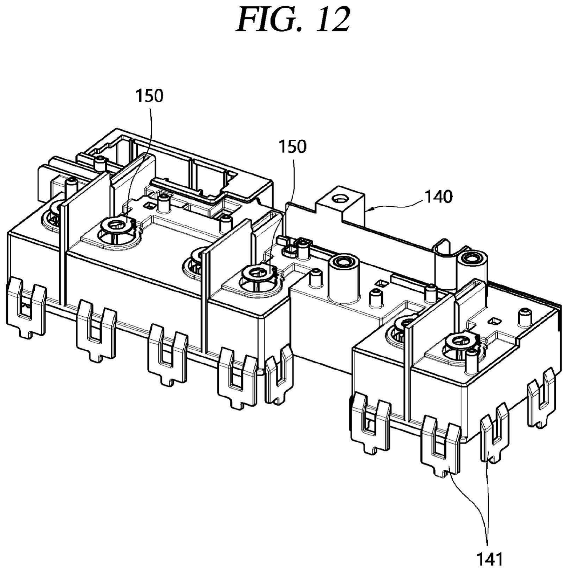

To this end, the battery disconnect apparatus 100 according to the embodiment of the present disclosure may include an embedded busbar 150 embedded in the upper case 140 as shown in FIGS. 12 to 14.

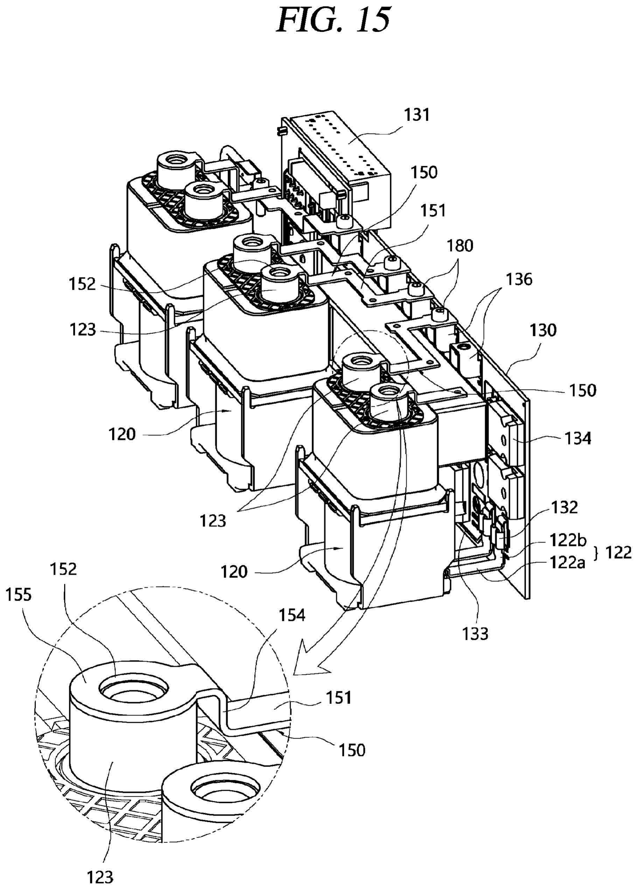

When the upper case 140 and the lower case 110 are coupled to each other in a state in which the relay 120 is mounted in the mounting space 111 and the circuit board 130 is mounted in the receiving space 112, the embedded busbar 150 may electrically connect the fixed contactor 123 of the relay 120 and the circuit board 130 to each other as shown in FIG. 15.

The circuit board 130 may be a precharge circuit-integrated PCB including a precharge circuit configured through the semiconductor switch 134 and the precharge resistance 135 in addition to the external connection terminal 131, the first terminal connection portion 132, and the wiring pattern 133, and the second terminal connection portion 136 arranged on the circuit board 130 to be electrically connected to the precharge circuit.

In this case, the embedded busbar 150 may electrically connect the fixed contactor 123 of the relay 120 and the second terminal connection portion 136 to each other in a state in which the upper case 140 and the lower case 110 are coupled to each other.

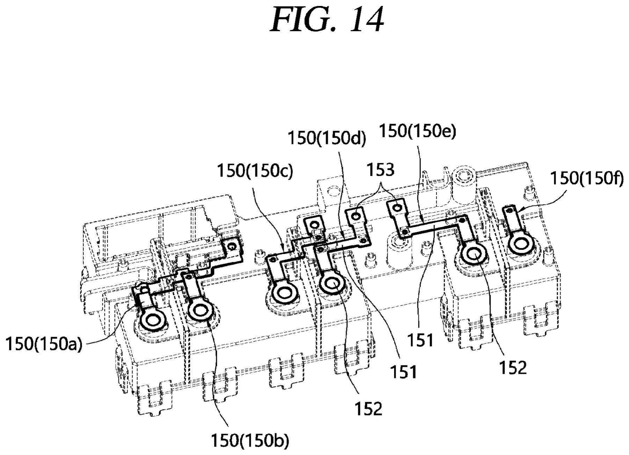

In an example, the embedded busbar 150 may include, as shown in FIG. 14, a body portion 151 made of a bar-shaped member having a predetermined length, a first fastening hole 152 formed at a side of one end portion of the body portion 151, and a second fastening hole 153 formed at a side of the other end portion of the body portion 151.

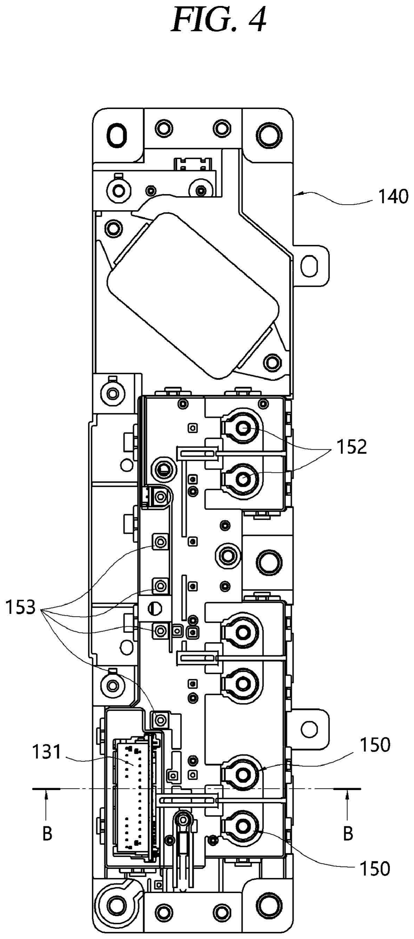

Also, the embedded busbar 150 may be embedded in the upper case 140 such that the first fastening hole 152 and the second fastening hole 153 are exposed to the outside as shown in FIGS. 4 and 12.

In addition, in a state in which the upper case 140 and the lower case 110 are coupled to each other, the embedded busbar 150 may be arranged such that the one end portion including the first fastening hole 152 is exposed to the outside at a position corresponding to the mounting space 111, and may be arranged such that the other end portion including the second fastening hole 153 is exposed to the outside at a position corresponding to the receiving space 112.

Therefore, when the upper case 140 and the lower case 110 are coupled to each other in a state in which the relay 120 is mounted in the mounting space 111 and the circuit board 130 is mounted in the receiving space 112, the one end portion of the embedded busbar 150, which includes the first fastening hole 152, may be in contact with the fixed contactor 123 of the relay 120, and the other end portion of the embedded busbar 150, which includes the second fastening hole 153, may be in contact with the second terminal connection portion 136 of the circuit bord 130.

In this case, as shown in FIG. 15, the end portion of the embedded busbar 150, which includes the second fastening hole 153, may be coupled to the second terminal connection portion 136 through a fixing member 180. Accordingly, electricity can be stably conducted to the embedded busbar 150 and the second terminal connection portion 136 of the circuit board 130.

Similarly, the end portion of the embedded busbar 150, which includes the first fastening hole 152, may be coupled to the fixed contactor 123 through a fixing member (not shown). Accordingly, electricity can be stably conducted to the embedded busbar 150 and the fixed contactor 123 of the relay 120.

The embedded busbar 150 may include, as shown in the enlarged view of FIG. 15, a first extending portion 154 extending upward from the one end portion of the body portion 151 by a predetermined length and a second extending portion 155 extending horizontally from an end of the first extending portion 154 by a predetermined length.

In this case, the first fastening hole 152 may be formed to be located in the second extending portion 155.

Therefore, although an upper surface of the fixed contactor 123 and an upper surface of the second terminal connection portion 136 of the circuit board 130 have different heights in a state in which the relay 120 is mounted in the mounting space 111, one surface of the second extending portion 155 in which the first fastening hole 152 is formed may be in surface contact with the upper surface of the fixed contactor 123 of the relay 120.

That is, the one surface of the second extending portion 155 may be adhered closely to the upper surface of the fixed contactor 123, and the end portion including the second fastening hole 153 may be adhered closely to the second terminal connection portion 136.

Accordingly, although the upper surface of the fixed contactor 123 is located relatively higher than the upper surface of the second terminal connection portion 136, electricity can be stably conducted to the embedded busbar 150 and each of the fixed contactor 123 and the second terminal connection portion 136 of the relay 120.

In the present disclosure, when the relay 120 is provided in plurality, the embedded busbar 150 may also be provided in a number corresponding to the total number of the relays 120.

In an example, when the lower case 110 is formed such that three mounting spaces 111 are partitioned from each other along the length direction of the lower case 110, and three relays 120 are individually mounted in the three mounting spaces 111, respectively, six embedded busbars 150a, 150b, 150c, 150d, 150e, and 150f may be embedded in the upper case 140.

In this case, the six embedded busbars 150a, 150b, 150c, 150d, 150e, and 150f may all be connected to the fixed contactor 123 while being connected to the second terminal connection portion 136, but some embedded busbars 150b and 150f may be provided such that one end portion of each of the embedded busbars 150b and 150f is not connected to the second terminal connection portion 136 while being connected to the fixed contactor 123.

Therefore, in the battery disconnect apparatus 100 according to the embodiment of the present disclosure, when the upper case 140 and the lower case 110 are coupled to each other in a state in which the relay 120 and the circuit board 130 are mounted in the mounting space 111 and the receiving space 112, respectively, the relay 120 may be electrically connected to the second terminal connection portion 136 of the circuit board 130 through the fixed contactor 123 and the embedded busbar 150 while electricity is conducted to the relay 120 and the external connection terminal 131 through coupling of the coil terminal 122 and the first terminal connection portion 132.

Accordingly, in the battery disconnect apparatus 100 according to the embodiment of the present disclosure although the relay 120 and the circuit board 130 are mounted in the mounting space 111 and the receiving space 112, respectively, electricity can be conducted to the fixed contactor 123 of the relay 120 and the circuit board 130 through the embedded busbar 150 embedded in the upper case 140 when the upper case 140 and the lower case 110 are coupled to each other, so that a wiring operation for electrically connecting the fixed contactor 123 of the relay 120 to the circuit board 130 can be reduced or minimized.

In addition, when the circuit board 130 is provided as a precharge circuit-integrated PCB including a precharge circuit as described above, the relay 120 mounted in the mounting space 111 can be easily connected to the precharge circuit included in the circuit board 130 through the embedded busbar 150 embedded in the upper case 140.

In the above description, it has been described that the second terminal connection portion 136 is electrically connected to the precharge circuit included in the circuit board 130. However, the present disclosure is not limited thereto, and the second terminal connection portion 136 may be electrically connected to another electrical device or another circuit, which is mounted on the circuit board 130.

Meanwhile, the battery disconnect apparatus 100 according to the embodiment of the present disclosure may include permanent magnets 161 and 162 for controlling an arc that may be generated when operation of the relay 120 mounted in the mounting space 111.

The permanent magnets 161 and 162 may be provided to be able to individually control arcs that may be generated respectively in the plurality of relays 120a, 120b, and 120c even when the plurality of relays 120a, 120b, and 120c are individually mounted in the respective mounting spaces 111.

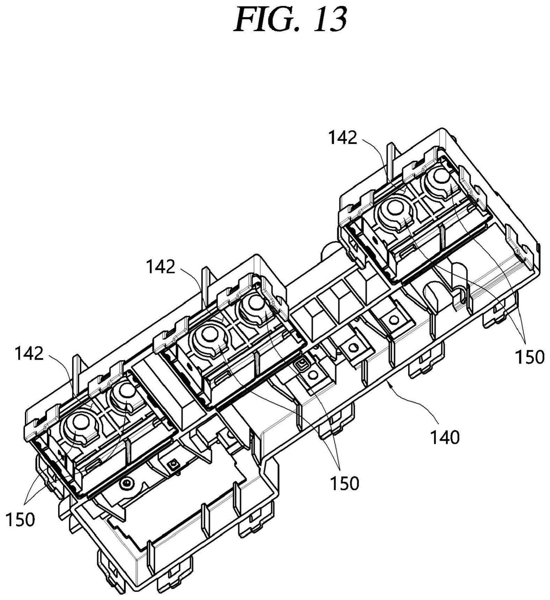

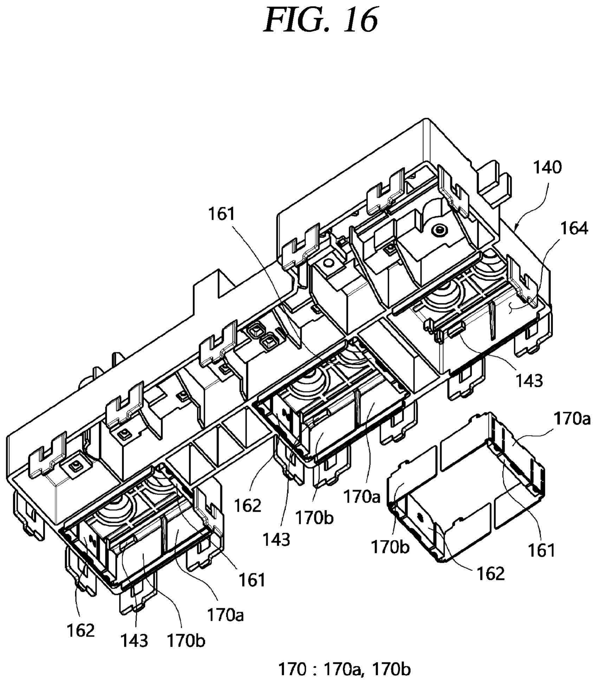

To this end, the upper case 140 may include, as shown in FIGS. 13 and 16, a plurality of upper mounting space 142 formed at positions corresponding to one-to-on the plurality of relays 120a, 120b, and 120c, and the permanent magnets 161 and 162 may be arranged in each of the plurality of upper mounting spaces 142 to be able to control an arc generated from the relay 120.

In this case, each of the plurality of relays 120a, 120b, and 120c individually mounted in the respective mounting spaces 111 may be mounted in the mounting space 111 of the lower case 110 such that the fixed contactor 123 is located at the upper portion of the body 121, and the fixed contactor 123 may be arranged to be located in the upper mounting space 142.

In addition, the permanent magnets 161 and 162 may be arranged in the upper mounting space 142 to surround the body 121 of the relay 120, which located in the upper mounting space 142, while being arranged along an internal circumferential surface of the upper mounting space 142.

In an example, the permanent magnets 161 and 162 may be arranged in the upper mounting space to surround the arc chamber portion 121a of the body 121, which forms the upper portion of the body 121 to accommodate the fixed contactor 123 and the movable contactor (not shown) therein.

In a non-limiting example, as shown in FIG. 16, the permanent magnets 161 and 162 may include a first permanent magnet 161 and a second permanent magnet 162, and the first permanent magnet 161 and the second permanent magnet 162 may be coupled to the upper case 140 so as to face each other in the upper mounting space 142.

The permanent magnets 161 and 162 may be detachably coupled to the upper case 140 through a permanent magnet holder 170.

That is, the battery disconnect apparatus 100 according to the embodiment of the present disclosure may further include the permanent magnet holder 170 detachably coupled to the upper case 140, and the permanent magnets 161 and 162 may be detachably coupled to the upper case 140 through the permanent magnet holder 170.

In an example, the permanent magnet holder 170 may include a first holder 170a to which the first permanent magnet 161 is coupled and a second holder 170b to which the second permanent magnet 162 is coupled, and each of the first holder 170a and the second holder 170b may include a holder body 171 to which the permanent magnets 161 and 162 are detachably coupled and a hook portion 172 formed to protrude outward from an end of the holder body 171 by a predetermined length.

In addition, the upper case 140 may include a coupling groove 143 formed to be located in the upper mounting space 142.

Therefore, each of the first holder 170a and the second holder 170b may be detachably coupled to the upper case 140 in the upper mounting space 142 through the hook portion 172 and the coupling groove 143.

In this case, as shown in FIG. 16, each of the first holder 170a and the second holder 170b may be coupled to the upper case 140 such that the first permanent magnet 161 and the second permanent magnet 162 face each other in the upper mounting space 142.

In addition, the first permanent magnet 161 and the second permanent magnet 162, which face each other in the upper mounting space 142, may be arranged such that different polarities face each other.

Accordingly, the first permanent magnet 161 and the second permanent magnet 162 form an electromagnetic force through a magnetic field along with current conducted to the fixed contactor 132 and the movable contactor even when an arc is generated in operation of the relay 120, so that the arc can be quickly expanded, thereby preventing components from being damaged due to the arc.

The permanent magnets 161 and 162 may be detachably coupled to the permanent magnet holder 170.

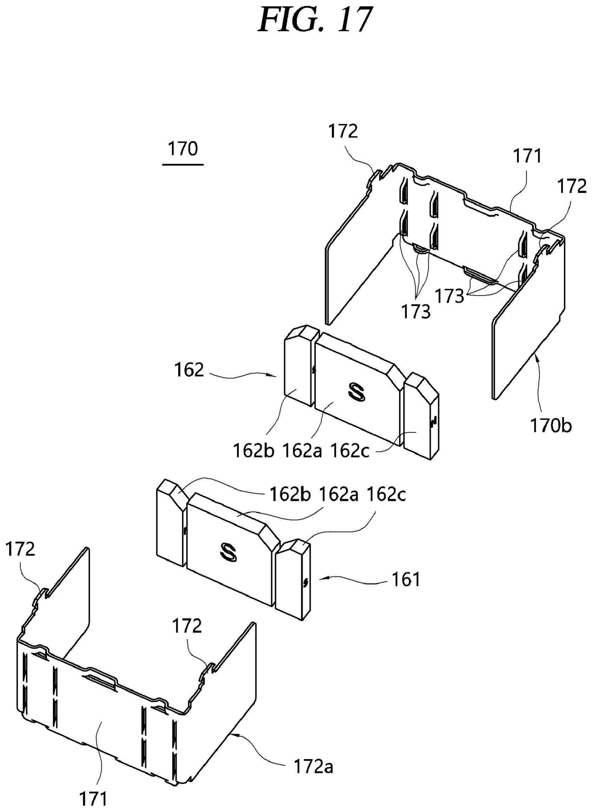

In an example, each of the first holder 170a and the second holder 170b may include, as shown in FIG. 17, a plurality of support ribs 173 formed to protrude from the holder body 171 so as to be able to support edges of the permanent magnets 161 and 162.

Accordingly, the edges of the permanent magnets 161 and 162 are supported through the plurality of support ribs 173 so that each of the permanent magnets 161 and 162 can be detachably coupled to one surface of the holder body 171.

Each of the first permanent magnet 161 and the second permanent magnet 162 may be configured as one, but may be provided in plurality to form a Halbach array.

In an example, the first permanent magnet 161 may include three permanent magnets 161a, 161b, and 161c arranged adjacent to each other along one direction, and the three permanent magnets 161a, 161b, and 161c may be arranged to form a Halbach array.

Similarly, the second permanent magnet 162 may include three permanent magnets 162a, 162b, and 162c arranged adjacent to each other along one direction, and the three permanent magnets 162a, 162b, and 162c may be arranged to form a Halbach array.

Although it has been illustrated and described in the drawing and the description that the permanent magnet holder 170 includes the first holder 170a and the second holder 170b, the present disclosure is not limited thereto, and the permanent magnet holder 170 may be configured in a form in which the first holder 170a and the second holder 170b are connected as one.

That is, the permanent magnet holder 170 may be configured as one member having a closed loop section, and each of the first permanent magnet 161 and the second permanent magnet 162 may be detachably coupled to the permanent magnet holder configured as one member.

In addition, when the lower case 110 includes the plurality of mounting spaces 111a, 111b, and 111c as described above, the plurality of relays 120a, 120b, and 120c may be individually mounted in the plurality of mounting spaces 111a, 111b, and 111c, respectively, and the plurality of upper mounting spaces 142 may be formed at positions corresponding one-to-one to the plurality of mounting spaces 111a, 111b, and 111c, respectively.

In this case, the permanent magnets 161 and 162 may be arranged in each of the plurality of upper mounting spaces 142 to control an arc generated from the relay 120.

Accordingly, the permanent magnets 161 and 162 can individually control arcs that may be generated respectively in the plurality of relays 120a, 120b, and 120c even when the plurality of relays 120a, 120b, and 120c are individually mounted in the plurality of mounting spaces 111a, 111b, and 111c, respectively.

Although the embodiment of the disclosure has been described, the scope of the disclosure is not limited to the embodiment described in this specification, and those skilled in the art who understand the concept of the disclosure may easily propose other embodiments included within the scope of the disclosure by adding, modifying, or deleting components, but these additions, modifications, or deletions should be construed as being included in the scope of the disclosure.

## Claims

1. A battery disconnect apparatus comprising:
a lower case comprising a mounting space having an open upper portion and formed along a first axis direction which is a length direction of the lower case;
a plurality of relays each individually mounted in the mounting space;
an upper case coupled to the lower case to be able to cover the open upper portion of the mounting space and comprising a plurality of upper mounting spaces respectively formed at positions corresponding one-to-one to the plurality of relays; and
a permanent magnet arranged in each of the plurality of upper mounting spaces to be able to control an arc generated from the relay.

2. The battery disconnect apparatus of claim 1, wherein the permanent magnet is detachably coupled to the upper case through a permanent magnet holder detachably coupled to the upper case while being arranged along an internal circumferential surface of the upper mounting space.

3. The battery disconnect apparatus of claim 2, wherein the permanent magnet comprises a first permanent magnet and a second permanent magnet,
wherein the permanent magnet holder comprises a first holder to which the first permanent magnet is detachably coupled and a second holder to which the second permanent magnet is detachably coupled, and
wherein each of the first holder and the second holder is coupled to the upper case such that the first permanent magnet and the second permanent magnet face each other in the upper mounting space.

4. The battery disconnect apparatus of claim 2, wherein the upper case comprises a coupling groove formed to be located in the upper mounting space, and
wherein the permanent magnet holder comprises:
a holder body to which the permanent magnet is detachably coupled, and a hook portion formed to protrude outward from an end of the holder body by a predetermined length and detachably fitted in the coupling groove.

5. The battery disconnect apparatus of claim 4, wherein the permanent magnet holder comprises a plurality of support ribs formed to protrude from the holder body to be able to support an edge of the permanent magnet, and
wherein the permanent magnet is detachably coupled to one surface of the holder body while the edge is supported by the plurality of support ribs.

6. The battery disconnect apparatus of claim 1, wherein the relay comprises a fixed contactor arranged to be exposed to the outside while protruding upward from a body by a predetermined height,
wherein the upper mounting space receives the fixed contactor of the relay in a state in which the relay is mounted in the mounting space, and
wherein the permanent magnet is arranged in the upper mounting space to surround the body of the relay.

7. The battery disconnect apparatus of claim 6, wherein the permanent magnet is arranged to surround an arc chamber portion of the body of the relay.

8. The battery disconnect apparatus of claim 1, wherein the permanent magnet comprises a first permanent magnet and a second permanent magnet, which are arranged in the upper mounting space such that one surfaces thereof face each other, and
wherein each of the first permanent magnet and the second permanent magnet is provided in plurality to form a Halbach array.

9. The battery disconnect apparatus of claim 1, wherein the lower case comprises a plurality of mounting spaces formed to be partitioned from each other while being arranged along the first axis direction,
wherein the plurality of relays are individually mounted in the plurality of mounting spaces, respectively, and
wherein the plurality of upper mounting spaces are formed at positions corresponding one-to-one to the plurality of mounting spaces, respectively.

10. The battery disconnect apparatus of claim 1, further comprising:
a circuit board comprising an external connection terminal for electrical connection to the outside,
wherein the lower case further comprises a receiving space having an open upper portion and formed to be adjacent to the mounting space along a second axis direction which is a width direction of the lower case while being partitioned from the mounting space by a partition wall, and
wherein each of the plurality of relays is electrically connected to the external connection terminal through direct coupling to the circuit board mounted in the receiving space in a state in which each of the plurality of relays is individually mounted in the mounting space.

11. The battery disconnect apparatus of claim 10, wherein each of the plurality of relays comprises a coil terminal protruding outward from a body by a predetermined length,
wherein the circuit board comprises a terminal connection portion arranged such that one end portion of the coil terminal can be fitted therein,
wherein the terminal connection portion is electrically connected to the external connection terminal through a wiring pattern formed on the circuit board, and
wherein the relay is physically coupled to the circuit board while being electrically connected to the external connection terminal through physical coupling of the coil terminal and the terminal connection portion.
